# EUROPEAN PATENT APPLICATION

(11) **EP 2 431 245 A1**
(43) Date of publication of application: **21.03.2012**
(21) Application number: 11181324.2
(22) Date of filing: 15.09.2011
(51) Int. Cl.: B60W 50/08, B62D 15/02

(54) **Communication system for a vehicle**

(30) Priority: 21.09.2010 SE 1050979
(71) Applicant: Scania CV AB, 151 87 Södertälje (SE)
(72) Inventor: Andersson, Jon, 151 46 Södertälje (SE); Ah-King, Joseph, 171 71 Solna (SE)

(57) **Abstract**

The invention comprises a communication system for a vehicle, comprising an information device 2 adapted to delivering driver information to the driver in the form of one or more information signals 4. The communication system further comprises a detection device 6 adapted to detecting whether the driver is using the vehicle's steering wheel 8, and to delivering a detection signal 10 which indicates his/her use of it as detected, and an evaluation device 12 adapted to receiving said detection signal 10 and information signal 4, to evaluating the information in the detection signal and, if the detection signal indicates that the driver is not using the steering wheel, to delivering the driver information via a user interface 14 which does not involve use of the steering wheel.

## Description

### Field of the invention

The present invention relates to a communication system, and a method in a communication system, according to the preambles of the independent claims.

### Background to the invention

A modem vehicle, e.g. a truck or a bus, is provided with a large number of systems which are in various ways involved in its operation. For a driver to be able to drive the vehicle in a safe and user-friendly way it is important that relevant information from these systems be presented to him/her in a clear and readily comprehensible way.

The commonest way of presenting the information is in the form of visual symbols on the driver display. Another common way is to generate acoustic signals intended to draw the driver's attention to a specific circumstance.

A further way of communicating with the driver is to communicate haptically, e.g. via the vehicle's steering wheel.

An example of information communicated to the driver haptically via the steering wheel appears in US 2007/0051547 which refers to a method for assisting him/her in various manoeuvres, e.g. when parking. Different forms of turning motion may then be imparted to the steering wheel depending on the extent to which the driver follows a calculated itinerary, e.g. increased motion is imparted if the steering wheel is not turned in a "correct" direction.

The information may also be conveyed to the driver haptically by the steering wheel being caused to vibrate to different degrees depending on the particular information to be conveyed.

The ongoing development of various automatic systems for assisting the driver makes it possible in certain circumstances for the vehicle to travel without the driver holding the steering wheel. An example of such automatic systems is so-called lane departure warning systems. An example of such a system is described in WO 2009/022947 which refers to a method and a system for making it easier for the driver to keep his/her vehicle in a given lane.

A problem in connection with haptic conveying of information to the driver via the steering wheel is that it presupposes that he/she holds it.

The object of the present invention is to ensure that the driver of a vehicle reliably receives relevant information even when driving without holding the steering wheel.

### Summary of the invention

The above object is achieved by the invention defined by the independent claims.

Preferred embodiments are defined by the dependent claims.

According to the invention, the communication system for a vehicle comprises an information device adapted to delivering driver information to the driver in the form of one or more information signals. The system further comprises a detection device adapted to detecting whether he/she is using the steering wheel, and to delivering a detection signal which indicates his/her use of it as detected, and an evaluation device adapted to receiving said detection signal and information signal, to evaluating the information in the detection signal and, if it indicates that the driver is not using the steering wheel, to delivering driver information via a user interface which does not involve use of the steering wheel.

The method according to the invention comprises detecting whether the driver is or is not holding the steering wheel, and if it is found that he/she is not doing so, this results in a change of communication strategy for the driver interface from haptic communication via the steering wheel to, for example, haptic communication via the driving seat, visual communication and/or acoustic communication.

Applying the invention means that information which would ordinarily be communicated to the driver haptically via the steering wheel reaches him/her even if he/she is not holding it. This means for example that the system need only generate disturbing acoustic and/or light signals when absolutely necessary.

### Brief description of drawing

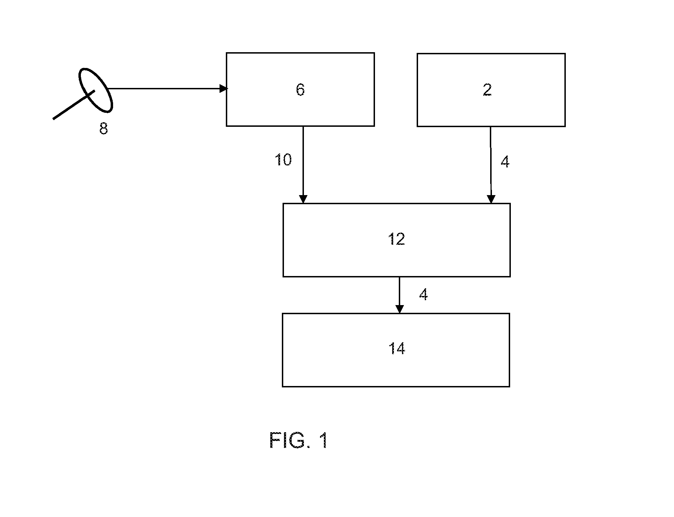

Figure 1 is a schematic block diagram illustrating the present invention.

### Detailed description of preferred embodiments of the invention

Preferred embodiments of the invention will now be described in detail with reference to Figure 1.

Figure 1 depicts a communication system according to the invention for a vehicle, comprising an information device 2 adapted to delivering driver information to the driver in the form of one or more information signals 4. The driver information preferably comprises information related to so-called lane departure warning systems, i.e. systems which warn and in certain cases assist the driver to maintain a desired position on the carriageway.

The communication system further comprises a detection device 6 adapted to detecting whether the driver is using the steering wheel 8, and to delivering a detection signal 10 indicating his/her use of it as detected. The detection signal 10 is preferably a digital signal which indicates whether the steering wheel is or is not being used, which is done in a conventional way by the signal being at a high or low level.

The system further comprises an evaluation device adapted to receiving said detection signal 10 and information signal 4, to evaluating the information in the detection signal and, if it indicates that the driver is not using the steering wheel, to delivering the driver information via a user interface 14 which does not involve using the steering wheel.

A number of different user interfaces 14 which do not involve using the steering wheel may be employed.

According to an embodiment, the driver information is delivered haptically via the vehicle's driving seat, e.g. by imparting vibrations to the seat.

According to another embodiment, the driver information is delivered visually to the driver. This may be done by lighting up various symbols in the driver display or by activating a lamp or an LED so situated that the driver can easily identify and interpret the information.

According to a further embodiment, the driver information is delivered acoustically to the driver. This may for example be done via existing loudspeaker systems whereby appropriate acoustic information is conveyed. The information may take the form of explicit commands or different alarm signals related to the specific situation concerned.

The user interface may of course be a combination of one or more haptic, visual and/or acoustic indications to the driver.

Detection devices are therefore adapted to monitoring whether the driver is using the steering wheel.

This may be achieved in various different ways, whether by electrical or mechanical monitoring of whether the driver is touching the steering wheel, by examining his/her use of it, or by visual detection.

Electrical monitoring is illustrated by, for example, US 7,019,623 which refers to a method for detecting the position of the hands on a steering wheel which is provided with a number of sensors for monitoring where the hands have contact with it. The sensors may be resistive, capacitive or inductive, all of which are applicable to the present invention.

The driver's use of the steering wheel may for example be detected by using a motion sensor situated close to the steering wheel or in the vehicle's control system to monitor the motion which the driver imparts to the steering wheel.

The detection device may further comprise, for example, a camera adapted to visually detecting the driver's use of the steering wheel. The camera is preferably fitted in the cab roof.

According to a further embodiment, the driver information is delivered haptically to the driver via the steering wheel if the detection signal indicates that he/she is using it. This may for example be advantageous if the invention is applied in a so-called lane departure warning system such as briefly mentioned above.

The invention comprises also a method in a communication system for a vehicle, which system comprises an information device adapted to delivering driver information to the driver in the form of one or more information signals.

The method comprises
A) detecting whether the driver is using the steering wheel,
B) generating a detection signal which indicates the driver's use of the steering wheel,
C) evaluating whether the driver is using the steering wheel, and
D) generating the driver information via a user interface which does not involve use of the steering wheel if the detection signal indicates that the driver is not using the steering wheel.

According to a preferred embodiment, the driver information is delivered haptically to the driver via the steering wheel if the detection signal indicates that he/she is using it.

The present invention is not restricted to the preferred embodiments described above. Sundry alternatives, modifications and equivalents may be used. The embodiments described above are therefore not to be regarded as limiting the invention's protective scope which is defined by the attached claims.

### Reference notations

- 2: information device
- 4: information signal
- 6: detection device
- 8: steering wheel
- 10: detection signal
- 12: evaluation device
- 14: user interface

## Claims

1. A communication system for a vehicle, comprising an information device (2) adapted to delivering driver information to the driver in the form of one or more information signals (4),
**characterised in that** the communication system comprises a detection device (6) adapted to detecting whether the driver is using the vehicle's steering wheel (8), and to delivering a detection signal (10) which indicates his/her use of it as detected, and
an evaluation device (12) adapted to receiving said detection signal (10) and information signal (4), to evaluating the information in the detection signal (10) and, if the detection signal (10) indicates that the driver is not using the steering wheel, to delivering the driver information via a user interface (14) which does not involve use of the steering wheel, which driver information comprises information concerning so-called lane departure warning systems, i.e. systems which warn and assist the driver to maintain a desired position on the carriageway.

2. A communication system according to claim 1, in which said user interface (14) is haptic via the driving seat.

3. A communication system according to claim 1, in which said user interface (14) is visual.

4. A communication system according to claim 1, in which said user interface (14) is acoustic.

5. A communication system according to claim 1, in which said user interface (14) provides the driver with a combination of haptic, visual and/or acoustic indications.

6. A communication system according to any one of claims 1-5, in which said detection device (6) comprises one or more inductive sensors situated on the steering wheel.

7. A communication system according to any one of claims 1-5, in which said detection device (6) comprises a motion sensor in the control system.

8. A communication system according to any one of claims 1-5, in which said detection device (6) is adapted to visually detecting whether the driver is using the steering wheel.

9. A communication system according to any one of the foregoing claims, in which the driver information is delivered haptically to the driver via the steering wheel if the detection signal (6) indicates that he/she is using it.

10. A method in a communication system for a vehicle, which system comprises an information device (2) adapted to delivering driver information to the driver in the form of one or more information signals (4),
**characterised in that** the method comprises
A) detecting whether the driver is using the steering wheel (8),
B) generating a detection signal (10) which indicates the driver's use of the steering wheel,
C) evaluating whether the driver is using the steering wheel, and
D) generating the driver information via a user interface (14) which does not involve use of the steering wheel if the detection signal indicates that the driver is not using the steering wheel.

11. A method according to claim 10, whereby the driver information is delivered haptically to the driver via the steering wheel if the detection signal indicates that he/she is using it.
